# FASCICULE DE BREVET EUROPEEN

(11) **EP 1 201 625 B1**
(45) Date de publication et mention de la délivrance du brevet: **17.03.2010**
(21) Numéro de dépôt: 01420211.3
(22) Date de dépôt: 23.10.2001
(51) Int. Cl.: C04B 40/00, C04B 24/26

(54) **Procédé pour améliorer la résistance mécanique notamment "aux jeunes âges" des matrices cimentaires, matrices cimentaires obtenues et leurs utilisations**
Verfahren zur Verbesserung der mechanischen Festigkeit von Zementmatrixen, im Besonderen der Früfestigkeit, die dadurch erhaltene Zementmatrixen und deren Verwendungen
Process for increasing the mechanical strength of cement matrixes, in particular at early stages, cement matrixes thus obtained and their uses

(30) Priorité: 25.10.2000 FR 0013660
(43) Date de publication de la demande: 02.05.2002
(73) Titulaire: COATEX S.A.S., 69730 Genay (FR)
(72) Inventeur: Gonnon, Pascal, 01480 Villeneuve (FR); Kensicher, Yves, 69380 Lozanne (FR); Jacquemet, Christian, 69005 Lyon (FR)

(56) Documents cités:
- EP-A- 0 246 181
- EP-A- 0 717 051
- EP-A- 0 742 186
- WO-A-00/50362
- WO-A-98/57905
- FR-A- 2 792 932

## Description

La présente invention concerne le secteur technique des dispersions de charges minérales, notamment les carbonates de calcium, et des agents dispersants, et plus précisément des agents dispersants conférant à ces dispersions de charges la capacité d'améliorer très notablement les propriétés mécaniques dites « résistance aux jeunes âges » des matrices cimentaires ou liants hydrauliques, plus particulièrement des bétons hydrauliques, préparés avec ces dispersions.

La présente invention concerne le secteur technique des mortiers, bétons, et autres compositions à base de ciment et/ou de sulfate de calcium hémihydrate, c'est-à-dire de manière générale des composés ou liants hydrauliques.

On sait que les matrices cimentaires telles les bétons, mortiers, coulis, etc.... et plus particulièrement les bétons hydrauliques, recouvrent deux types principaux d'utilisation, les bétons prêts à l'emploi et les produits préfabriqués.

On sait qu'un béton est composé essentiellement d'un ciment et d'un granulat ainsi que d'eau et d'adjuvants ou additifs.

Selon la granulométrie, on classe les granulats en plusieurs catégories connues de l'homme du métier et définies par la norme française XP P 18-540.

Dans cette norme, les familles de granulats comprennent :
- les fillers 0/D où D < 2 mm avec au moins 70 % de passant à 0,063 mm,
- les sablons 0/D où D ≤ 1 mm avec moins de 70 % de passant à 0,063 mm,
- les sables 0/D où 1< D s 6,3 mm,
- les graves 0/D où D > 6,3 mm,
- les gravillons d/D où d > 1 mm et D ≤ 125 mm,
- les ballasts d/D où d > 25 mm et D ≤ 50 mm,
avec d et D tels que définis dans ladite norme.

Des exemples de fillers sont par exemple des fumées de silice ou additions siliceuses, ou des additions calcaires comme du carbonate de calcium.

On connaît déjà l'incorporation, à des matrices cimentaires ou liants hydrauliques, de fumées de silice ou additions siliceuses, ou d'additions calcaires comme du carbonate de calcium.

En particulier, on sait utiliser le carbonate de calcium soit sous forme sèche soit sous forme de dispersion dans l'eau ou dans un milieu aqueux ne comportant pas de dispersant.

On connaît notamment le brevet WO 99/47468 qui décrit l'emploi de carbonate de calcium sous forme d'une dispersion aqueuse pour préparer des bétons. Ce document représente un exemple de technologie (tel que présenté par ailleurs ci-dessous) visant un compromis plus ou moins acceptable entre maniabilité et résistance aux jeunes âges. Toutefois, ce document se borne à incorporer, dans la matrice cimentaire ou liant hydraulique, un additif comme fluidifiant pour améliorer la fluidité, ce qui ressort des fonctions connues des additifs dans l'art antérieur.

On connaît encore le brevet EP 0 271 435, le brevet EP 0 725 043 et le brevet US 5,614,017 qui concernent l'emploi de plastifiants dans les ciments en vue, respectivement, d'améliorer la résistance à la compression, ou diminuer le retrait, ou augmenter le temps d'ouvrabilité mesuré au cône d'Abrams encore appelé « slump ».

Dans le brevet EP 0 271 435, l'additif agit comme réducteur d'eau, ce qui est parfaitement conforme à la recherche d'un rapport eau/ciment (E/C) aussi faible que possible pour améliorer une résistance mécanique.

Dans le brevet EP 0 725 043, le plastifiant est utilisé à très faible concentration et le problème technique posé est totalement différent de celui de l'invention, de même que pour le brevet US 5,614,017.

Dans les trois cas, le granulat est du type filler 0/D tel que défini plus haut (D < 2 mm avec au moins 70 % de passant à 0,063 mm), le carbonate de calcium est employé en poudre sèche et non en dispersion, et l'ajout de l'adjuvant est effectué au moment de la préparation de la matrice cimentaire ou liant hydraulique, c'est-à-dire « a posteriori » et non avant la préparation de la matrice cimentaire ou liant hydraulique comme selon l'invention.

On sait également utiliser des adjuvants pour défloculer la pâte de ciment et/ou réduire la quantité d'eau dans le ciment.

On sait, à ce propos, que si la proportion d'eau augmente dans une matrice cimentaire ou liant hydraulique, les résistances mécaniques sont amoindries. L'homme du métier s'efforce donc toujours, dans ses formulations, de diminuer le rapport eau/ciment E/C.

Cependant, l'homme du métier sait également que, si la proportion d'eau augmente dans une matrice cimentaire ou liant hydraulique, la maniabilité de celle-ci (c'est-à-dire son aptitude à être manipulé, pompé, etc...) augmente.

L'homme du métier est donc très souvent forcé de rechercher un compromis entre les propriétés mécaniques et la maniabilité.

Parmi les propriétés mécaniques des matrices cimentaires ou liants hydrauliques, l'une des plus importantes pour l'homme du métier concerne « la résistance aux jeunes âges ».

Cette propriété est définie comme l'évolution de la courbe de résistance à la compression, en fonction de l'âge de préparation de la matrice cimentaire ou liant hydraulique, dans la zone de 0 heure à 7 jours suivant la préparation de la matrice cimentaire ou liant hydraulique, avec notamment une mesure normalisée à 2 jours et à 7 jours.

Comme on l'a vu ci-dessus, cette propriété ne peut pas être améliorée, dans l'art antérieur, au delà d'un compromis qui, comme tout compromis, n'est pas satisfaisant.

Il existe donc un besoin important et reconnu pour un moyen visant à augmenter de manière significative cette propriété de résistance aux jeunes âges, sans affecter négativement d'autres propriétés intéressantes comme par exemple la maniabilité.

L'invention consiste à utiliser la charge minérale à incorporer à la matrice cimentaire ou liant hydraulique sous la forme d'une dispersion de charge minérale, notamment de carbonate de calcium, comportant au moins un agent dispersant selon l'invention, dont l'action, en combinaison avec les autres ingrédients, d'une manière non élucidée par le Demandeur, augmente la résistance mécanique et en particulier la résistance aux jeunes âges dans des proportions considérables.

Selon l'invention, on prépare la dispersion de charge minérale par l'ajout du ou des agents dispersants spéciaux dans la dispersion de ladite charge. En d'autres termes, on n'incorpore pas le ou les agents dispersants directement dans la matrice cimentaire ou liant hydraulique.

L'invention concerne donc un procédé pour conférer aux matrices cimentaires ou liants hydrauliques tels bétons, mortiers, coulis, ou encore compositions à base de sulfate de calcium hémihydrate, une résistance mécanique améliorée et notamment une résistance mécanique aux jeunes âges améliorée.

Ce procédé, qui vise à incorporer à la préparation pour matrice cimentaire ou liant hydraulique une charge minérale sous forme de dispersion aqueuse de cette charge minérale, se caractérise en ce que ladite dispersion de charge minérale contient l'agent dispersant spécial.

Une famille de copolymère est décrite dans la demande de brevet français du Demandeur, non publiée, n° 9905665, où ces copolymères ont une fonction d'amélioration très notable de la maniabilité des liants hydrauliques.

Ainsi, il est contraire aux connaissances de l'homme du métier de chercher à employer un tel agent de maniabilité comme agent dispersant dans la préparation de dispersion de charge minérale mise en oeuvre dans la fabrication des matrices cimentaires ou des liants hydrauliques.

De même, il était a priori contraire à l'ensemble de l'art antérieur de chercher à préparer une matrice cimentaire à l'aide de dispersions contenant un agent dispersant spécial.

On connaît aussi d'autres documents relatifs à l'arrière-plan technologique de la présente invention, mais qui ne la révèle ni la suggère en rien.

Ainsi, le document WO 98 / 57905 décrit-il des suspensions aqueuses de méta-kaolin contenant un agent épaississant destiné à conférer auxdites suspensions une rhéologie améliorée et à éviter leur sédimentation.

On connaît aussi le document EP 0717051 qui décrit un procédé de séparation applicables à des polymères acryliques, qui sont ensuite mis en oeuvre comme agents dispersants ou d'aide au broyage de matières minérales.

On connaît aussi le document EP 0 246 181 qui décrit des suspensions aqueuses de microsilices, contenant en outre un agent dispersant de nature anionique.

On connaît aussi le document WO 00 50362 qui décrit une suspension aqueuse de ciment en présence d'un agent plastifiant.

On connaît enfin le document EP 0 742 186 qui décrit des suspensions aqueuses d'un pigment avec un latex et un agent stabilisant pour être mis en oeuvre dans un ciment.

Les polymères utilisés, selon l'invention, comme agent dispersant apportant aux matrices cimentaires ou liants hydrauliques tels bétons, mortiers, coulis, ou encore compositions à base de sulfate de calcium hémihydrate, une résistance mécanique améliorée et notamment une résistance mécanique aux jeunes âges améliorée sont caractérisés en ce qu'ils consistent en copolymères obtenus par la copolymérisation radicalaire d'au moins un monomère éthylénique uréthanne alkoxy-, aryloxy-, alkylaryloxy-, arylalkyloxy-, alkoxy-polyalkylène glycol et plus particulièrement uréthanne alkoxy-, aryloxy-, alkylaryloxy-, arylalkyloxy-polyéthylène glycol avec au moins un monomère anionique et au moins un monomère non ionique en présence éventuelle d'un acrylate ou méthacrylate d'alkoxy-, aryloxy-, alkylaryloxy-, arylalkyloxy-polyalkylène glycol ou d'un éther allylique d'alkoxy-, aryloxy-, alkylaryloxy-, arylalkyloxy-polyalkylène glycol et plus particulièrement d'acrylate ou méthacrylate de méthoxy-polyéthylène glycol, ledit PEG (polyéthylène glycol) étant défini par un poids moléculaire supérieur à 300, ainsi qu'en présence éventuelle de monomères éthyléniques possédant au moins deux doubles liaisons polymérisables, encore appelés réticulants.

Le copolymère, utilisé comme nouvel agent d'amélioration de la résistance aux jeunes âges pour matrices cimentaires ou liants hydrauliques selon l'invention est préparé par les procédés connus de la copolymérisation radicalaire en solution, en émulsion, en suspension ou par précipitation du mélange des monomères précités, en présence d'un système catalytique et d'agents de transfert connus, mis en oeuvre selon des quantités appropriées, le poids moléculaire dudit copolymère étant ajusté à l'aide des moyens connus tels que par exemple la température, le taux de catalyseur, la présence ou non d'agents de transfert ou encore tout autre moyen ou combinaison de moyens connus de l'homme de l'art.

Le système catalytique de polymérisation, qui peut varier en quantité en poids entre 0,1 % et 20 % par rapport à la masse totale des monomères, est souhaitablement choisi parmi ceux qui sont hydrosolubles tels que, par exemple, les persulfates de sodium, de potassium, d'ammonium ou les azoïques ou encore les peroxydes ou les hydroperoxydes tels que, notamment l'eau oxygénée, et éventuellement mis en oeuvre avec un composé réducteur connu tel que notamment le métabisulfite de sodium, l'hypophosphite de sodium, l'acide phosphoreux, l'acide hypophosphoreux ou encore les sels métalliques.

L'agent de transfert de chaîne est souhaitablement choisi parmi les alkyl-mercaptans tels que, par exemple, l'octanethiol, le décanethiol, le n-dodécanethiol, le t-dodécanethiol ou encore parmi l'acide mercapto-propionique, l'acide mercapto-succinique, l'acide thioglycolique ou encore le mercaptoéthanol ou encore les alcools secondaires, certains halogénures d'alkyle ou les sels des acides du phosphore de degré d'oxydation inférieur à 5, ainsi que divers autres additifs connus de l'homme du métier, en tant que limitateur de chaînes.

Dans toute la présente demande, les abréviations utilisées ont la signification suivante :
- PO₄MAEG: = phosphate de méthacrylate d'éthylène glycol
- MAEG: = méthacrylate d'éthylène glycol
- PEG 350: = polyéthylène glycol de poids moléculaire 350
- PEG 750: = polyéthylène glycol de poids moléculaire 750
et par analogie, tout nombre suivant les lettres PEG indique le poids moléculaire dudit PEG.
- AE: = acrylate d'éthyle
- Acryl: = acrylamide
- AMA: = acide méthacrylique
- AA: = acide acrylique
- TEA: = triéthanolamine
- TDI: = toluène diisocyanate
- IPDI: = isophorone diisocyanate

On polymérise selon la présente invention les monomères suivants :
a) au moins un monomère anionique,
b) au moins un monomère non ionique,
c) au moins un monomère éthylénique uréthanne alkoxy-, aryloxy-, alkylaryloxy-, arylalkyloxy-polyalkylène glycol appelé parfois monomère spécial uréthanne,
d) éventuellement un ester acrylique ou méthacrylique d'alkoxy-, aryloxy-, alkylaryloxy-, arylalkyloxy-polyalkylène glycol, ou un éther allylique d'alkoxy-, aryloxy-, alkylaryloxy-, arylalkyloxy-polyalkylène glycol,
e) éventuellement un ou des monomères éthyléniques possédant au moins deux doubles liaisons polymérisables et appelés réticulants.

De manière préférentielle, le copolymère, utilisé selon l'invention comme agent dispersant apportant une amélioration à la résistance à la compression des matrices cimentaires ou liants hydrauliques, contient :
a) de 1 % à 50 % en poids, d'un ou plusieurs monomères anioniques,
b) de 2 % à 65 % en poids, d'un ou plusieurs monomères non ioniques,
c) de 3 % à 65 % en poids, d'un monomère éthylénique uréthanne alkoxy-, aryloxy-, alkylaryloxy-, arylalkyloxy-polyalkylène glycol,
d) de 0 % à 90 % en poids d'un acrylate ou méthacrylate d'alkoxy-, aryloxy-, alkylaryloxy-, arylalkyloxy-polyalkylène glycol, ou d'un éther allylique d'alkoxy-, aryloxy-, alkylaryloxy-, arylalkyloxy-polyalkylène glycol, et en particulier d'un acrylate ou méthacrylate de méthoxy-polyéthylène glycol, ledit PEG ayant un poids moléculaire supérieur à 300,
e) de 0 % à 5 % en poids d'un ou plusieurs réticulants.

Le total des monomères a), b), c), d) et e) étant égal à 100 %.

Le ou les monomères anioniques sont choisis parmi l'acide acrylique, l'acide méthacrylique, l'acide 2-acrylamido-2-méthyl-1-propane sulfonique, l'acide 2-méthacrylamido-2-méthyl-1-propane sulfonique, l'acide 3-méthacrylamido-2-hydroxy-1-propane sulfonique, l'acide allylsulfonique, l'acide méthallylsulfonique, l'acide allyloxybenzène sulfonique, l'acide méthallyloxybenzène sulfonique, l'acide 2-hydroxy-3-(2-propényloxy) propane sulfonique, l'acide 2-méthyl-2-propène-1-sulfonique, l'acide éthylène sulfonique, l'acide propène sulfonique, l'acide 2-méthyl propène sulfonique, l'acide styrène sulfonique, l'acide vinyl sulfonique, le méthallylsulfonate de sodium, l'acrylate ou méthacrylate de sulfoéthyle ou sulfopropyle, le sulfométhylacrylamide, le sulfométhylméthacrylamide, le phosphate ou phosphonate ou sulfate ou sulfonate d'acrylate ou méthacrylate d'alkylène glycol, l'acide itaconique, l'anhydride maléique, le méthallylsulfonate de sodium, l'acide styrène sulfonique et plus particulièrement choisis parmi l'acide acrylique, l'acide méthacrylique, l'acide 2-acrylamido méthyl-1-propane sulfonique, le phosphate de méthacrylate d'éthylène glycol ou encore le phosphate d'acrylate d'éthylène glycol.

Le ou les monomères non ioniques sont choisis parmi l'acrylamide ou le méthacrylamide ou leurs dérivés, les alkyl-esters en C₁ à C₄₀ des acides acryliques ou méthacryliques, les alkoxy-, aryloxy-, alkylaryloxy-, arylalkyloxy-acrylates ou méthacrylates oxyalkylés, oxyarylés, oxyalkylarylés, oxyarylalkylés (le nombre d'oxyde d'alkylène, d'arylène, d'alkylarylène ou d'arylalkylène étant compris entre 1 et 120), l'acétate de vinyle, la vinylpyrrolidone, le styrène ou encore l'alphaméthyl-styrène et plus particulièrement parmi l'acrylamide ou l'acrylate d'éthyle.

Le ou les monomères uréthanne alkoxy-, aryloxy-, alkylaryloxy-, arylalkyloxy-polyalkylène glycol sont choisis parmi les produits de réaction d'alkoxy-polyalkylène glycol avec un isocyanate insaturé polymérisable et plus particulièrement parmi les produits de réaction de méthoxy-PEG avec un isocyanate acrylique, méthacrylique, vinylique ou encore allylique.

Le ou les monomères réticulants sont choisis dans le groupe constitué par le diméthacrylate d'éthylène glycol, le divinylacétylène, le divinylbenzène, le triméthylolpropanetriacrylate, l'acrylate d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres.

Le polymère utilisé selon l'invention peut être, ultérieurement à l'étape de polymérisation, fractionné par les moyens de fractionnement bien connu de l'homme de l'art.

Ce polymère utilisé selon l'invention est mis en oeuvre sous forme totalement acide ou partiellement neutralisée ou totalement neutralisée par un ou plusieurs agents de neutralisation disposant d'une fonction monovalente et éventuellement d'une fonction polyvalente.

Les agents de neutralisation disposant d'une fonction monovalente sont choisis dans le groupe constitué par les composés contenant des cations alcalins, en particulier le sodium et le potassium ou encore le lithium, l'ammonium, ou bien les amines primaires ou secondaires aliphatiques et/ou cycliques telles que par exemple les éthanolamines, la mono et diéthylamine ou encore la cyclohexylamine.

Les agents de neutralisation disposant d'une fonction polyvalente sont choisis dans le groupe constitué par les composés contenant des cations divalents alcalino-terreux, en particulier le magnésium et le calcium ou encore le zinc, de même que par les cations trivalents, dont en particulier l'aluminium ou encore par certains composés contenant des cations de valence plus élevée.

Les charges minérales que l'on pourra utiliser selon l'invention sont choisies parmi, à titre non limitatif, le carbonate de calcium naturel (craie, calcite, marbre ou autre carbonate de calcium naturel), le carbonate de calcium précipité, le carbonate de baryum, les roches carbonatées, la dolomie, le talc, la silice broyée, les silices en général, les fumées de silice, les fumées de dioxyde de titane, les diatomites, les oxydes de fer, les oxydes de manganèse, le dioxyde de titane, la chaux, le kaolin, les méta-kaolins, les argiles, le mica, les plâtres, les cendres volantes, les laitiers, le sulfate de calcium, les zéolites, le basalte, le sulfate de baryum, le trihydroxyde d'aluminium, ou leurs mélanges.

Selon l'invention, on peut préparer la dispersion de plusieurs charges, soit par le mélange des dispersions de chacune des charges, soit par la co-dispersion des charges.

L'invention concerne également les matrices cimentaires ou liants hydrauliques comme les bétons, mortiers, coulis, ou les compositions à base de ciment et/ou de sulfate de calcium hémihydrate et plus particulièrement les bétons hydrauliques, contenant la dispersion aqueuse de charge minérale et au moins un polymère utilisé, selon l'invention comme un agent dispersant améliorant la résistance aux jeunes âges.

L'invention concerne de plus l'utilisation des matrices cimentaires ou des liants hydrauliques selon l'invention dans la construction, le bâtiment, les travaux publics, les ouvrages d'art, les travaux offshore ou encore les ciments pétroliers et les services parapétroliers.

L'invention couvre également tous les modes de réalisation et toutes les applications qui seront directement accessibles à l'homme du métier à la lecture de la présente demande, de ses connaissances propres, et éventuellement d'essais simples de routine.

D'autres caractéristiques et avantages de l'invention seront mieux compris à la lecture de la description qui va suivre et des exemples non limitatifs ci-dessous.

### EXEMPLE 1 :

Cet exemple concerne la mise en évidence de l'amélioration des propriétés mécaniques d'un mortier apportée par la mise en oeuvre de dispersion de carbonate de calcium naturel contenant l'agent dispersant spécifique.

Dans ce but pour chacun des essais de l'exemple, on verse dans un malaxeur à mortier (EN 196-1) en position marche, les différents constituants du mortier standard dosé à 450 kg/m³ de ciment dont la composition est la suivante :
- 450 g de ciment CEM I 42.5R CP2 de Gaurain conforme à la norme NF P 15-301 ;
- la quantité de dispersion de carbonate de calcium à tester ;
- la quantité d'eau nécessaire ;
- une quantité variable en grammes de sable normalisé de Leucate (EN 196-1). Cette quantité de sable étant ajoutée pendant 30 secondes et après 30 secondes d'agitation rapide du mélange des constituants précédemment ajoutés.

Les quantités des constituants sont ajustées pour chacun des mortiers des différents essais afin de travailler à compacité constante.

L'expérience a été menée sur des mortiers dont la rhéologie, mesurée au maniabilimètre à mortier défini par la norme NF P 15-412, est comprise entre 1 et 3 secondes.

Après 90 secondes de malaxage, ce dernier est stoppé afin de pouvoir racler les parois du malaxeur.

Une fois terminé le raclage du mortier adhérent sur les parois, le malaxage est repris pendant 1 minute à vitesse rapide.

Le respect de ces temps nous permet d'obtenir un cycle de malaxage qui dure 4 minutes et est conforme à la norme EN 196-1.

Dès la fin du malaxage, les éprouvettes sont constituées et sont placées dans une enceinte climatique humide (EN 196-1) entre 20 et 24 heures puis démoulées, pesées et placées dans un bac de conservation. Ce mode opératoire est conforme à la norme EN 196-1.

A l'âge requis, ces éprouvettes sont sorties de leur enceinte de conservation puis testées en flexion et en compression selon la norme EN 196-1.

### Essai n° 1

Cet essai est un mortier témoin dosé à 450 kg/m³ sans carbonate de calcium avec un rapport eau/ciment E/C égal à 0,55.

### Essai n° 2

Cet essai est un mortier de l'art antérieur dosé à 450 kg/m³ mettant en oeuvre 10 %, par rapport au poids sec de ciment, d'une calcite sous forme de poudre commercialisée sous le nom de Betocarb™ 2 avec un rapport E/C égal à 0,54.

### Essai n° 3

Cet essai est un mortier de l'art antérieur dosé à 450 kg/m³ mettant en oeuvre 30 %, par rapport au poids sec de ciment, d'une calcite sous forme de poudre commercialisée sous le nom de Betocarb™ 2 avec un rapport E/C égal à 0,52.

### Essai n° 4

Cet essai illustre l'invention et est relatif à un mortier selon l'invention, dosé à 450kg/m³ avec un rapport E/C égal à 0,46 et mettant en oeuvre 10 % en poids sec, par rapport au poids sec de ciment, d'une dispersion aqueuse d'une calcite à 20 % en matière sèche de diamètre médian égal à 2 micromètres mesuré au Sédigraph™ 5100, au moyen de 0,70 %, en poids sec par rapport au poids sec de carbonate de calcium, d'un copolymère composé de :
- 15,0 % en poids d'acide méthacrylique ;
- 2,0 % d'acrylamide ;
- 63,0 % en poids de méthacrylate de méthoxy-PEG 750 ;
- 20,0 % en poids de méthacryluréthanne de méthoxy-PEG 750.

Dans ce but, et à l'aide d'un agitateur électro-magnétique à ailettes, on prépare la dispersion aqueuse de carbonate de calcium par introduction de la charge minérale dans l'eau additivée du copolymère dispersant.

### Essai n° 5

Cet essai illustre l'invention et est relatif à un mortier selon l'invention, dosé à 450 kg/m³ avec un rapport E/C égal à 0,41 et mettant en oeuvre 30 % en poids sec, par rapport au poids sec de ciment, d'une dispersion de calcite à 45 % en matière sèche de diamètre médian égal à 2 micromètres mesuré au Sédigraph™ 5100, au moyen de 0,70 %, en poids sec, par rapport au poids sec de carbonate de calcium, du même copolymère que celui mis en oeuvre dans l'essai n° 4.
Le mode opératoire et le matériel mis en oeuvre pour la dispersion du carbonate de calcium sont identiques à ceux de l'essai n° 4.

Les résultats de mesure de la résistance à la compression à 2 jours, 7 jours, 28 jours et 90 jours pour les différents essais sont rassemblés dans le tableau I suivant.

| **ESSAI n°** | **TEMOIN** | **ART ANTERIEUR** | **ART ANTERIEUR** | **INVENTION** | **INVENTION** |
|---|---|---|---|---|---|
| | 1 | 2 | 3 | 4 | 5 |
| Masse de ciment en g | 450 | 450 | 450 | 450 | 450 |
| Masse de sable en g | 1580 | 1534 | 1475 | 1533 | 1539 |
| Masse de carbonate de calcium en g | 0 | 45 | 135 | 45 | 155 |
| Dosage en eau efficace en g | 242 | 242 | 234 | 208 | 187 |
| Rapport Eau efficace/Ciment | 0,54 | 0,54 | 0,52 | 0,46 | 0,41 |
| Maniabilité en secondes | 2,59 | 2,38 | 2,43 | 2,88 | 2,57 |
| Résistance à la compression en KN à 2 jours | 39,7 | 41,5 | 51,8 | 61,1 | 85,9 |
| Résistance à la compression en KN à 7 jours | 64,5 | 67,5 | 77,2 | 83,2 | 116,2 |
| Résistance à la compression en KN à 28 jours | 82,6 | - | - | 99,1 | 123,6 |
| Résistance à la compression en KN à 90 jours | 92,5 | - | - | 107,4 | 133,1 |
| Gain de résistance en % à 2 jours | 0 | 4,6 | 31 | 54 | 121 |
| Gain de résistance en % à 7 jours | 0 | 4,7 | 20 | 29 | 73 |
| Gain de résistance en % à 28 jours | 0 | - | - | 20 | 50 |
| Gain de résistance en % à 90 jours | 0 | - | - | 16 | 44 |

La lecture des résultats du Tableau I ci-dessus permet de mettre en évidence que les propriétés mécaniques de résistance à la compression d'un mortier (résistance à 2 jours, 7 jours, 28 jours et 90 jours) sont significativement améliorées par la mise en oeuvre, selon l'invention, d'une dispersion de carbonate de calcium contenant l'agent dispersant spécial et plus particulièrement les propriétés de résistance aux jeunes âges (résistance à 2 jours et 7 jours).

### EXEMPLE 2 :

Cet exemple étudie et compare, sur un mortier standard dosé à 450 kg/m³, l'influence du dosage en quantité croissante (de 15 à 60 % du poids du ciment, par pas de 15 %) d'une dispersion de carbonate de calcium de diamètre médian égal à 2,53 micromètres mesuré au moyen d'un granulomètre Sédigraph™ 5100 et obtenue à l'aide de 0,7 % de l'agent dispersant de l'essai n° 4.

La dispersion est incorporée en remplacement des volumes d'eau et de sable de manière à travailler à compacité constante.

L'expérience a été menée sur des mortiers dont la rhéologie, mesurée au maniabilimètre, est comprise entre 1 et 3 secondes, selon le même mode opératoire que celui de l'exemple précédent.

### Essai n° 6

Cet essai est un mortier témoin dosé à 450 kg/m³ sans carbonate de calcium avec un rapport eau/ciment E/C égal à 0,55.

### Essai n° 7

Cet essai illustre l'invention et est relatif à un mortier selon l'invention, dosé à 450 kg/m³ avec un rapport E/C égal à 0,46 et mettant en oeuvre 15 % en poids sec, par rapport au poids sec de ciment, de la dispersion aqueuse de carbonate de calcium décrite ci-dessus, de diamètre médian égal à 2,53 micromètres.

Le mode opératoire et le matériel mis en oeuvre pour la dispersion du carbonate de calcium sont identiques à ceux de l'essai n° 4.

### Essai n° 8

Cet essai illustre l'invention et est relatif à un mortier selon l'invention, dosé à 450 kg/m³ avec un rapport E/C égal à 0,43 et mettant en oeuvre 30 % en poids sec, par rapport au poids sec de ciment, de la dispersion aqueuse de carbonate de calcium décrite ci-dessus, de diamètre médian égal à 2,53 micromètres.

Le mode opératoire et le matériel mis en oeuvre pour la dispersion du carbonate de calcium sont identiques à ceux de l'essai n° 4.

### Essai n° 9

Cet essai illustre l'invention et est relatif à un mortier selon l'invention, dosé à 450 kg/m³ avec un rapport E/C égal à 0,40 et mettant en oeuvre 45 % en poids sec, par rapport au poids sec de ciment, de la dispersion aqueuse de carbonate de calcium décrite ci-dessus, de diamètre médian égal à 2,53 micromètres.

Le mode opératoire et le matériel mis en oeuvre pour la dispersion du carbonate de calcium sont identiques à ceux de l'essai n° 4.

### Essai n° 10

Cet essai illustre l'invention et est relatif à un mortier selon l'invention, dosé à 450 kg/m³ avec un rapport E/C égal à 0,39 et mettant en oeuvre 60 % en poids sec, par rapport au poids sec de ciment, de la dispersion aqueuse de carbonate de calcium décrite ci-dessus, de diamètre médian égal à 2,53 micromètres.

Le mode opératoire et le matériel mis en oeuvre pour la dispersion du carbonate de calcium sont identiques à ceux de l'essai n° 4.

Les résultats de mesure de la résistance à la compression à 2 jours, 7 jours et 28 jours pour les différents essais sont représentés dans le Tableau II ci-après.

| **ESSAI n°** | **TEMOIN** | **INVENTION** | **INVENTION** | **INVENTION** | **INVENTION** |
|---|---|---|---|---|---|
| | 6 | 7 | 8 | 9 | 10 |
| Masse de ciment en g | 450 | 450 | 450 | 450 | 450 |
| Masse de sable en g | 1561 | 1545 | 1534 | 1527 | 1483 |
| Masse de carbonate de calcium en g | 0 | 67 | 135 | 202 | 270 |
| Dosage en eau efficace en g | 248 | 209 | 195 | 182 | 177 |
| Rapport Eau efficace/Ciment | 0,55 | 0,46 | 0,43 | 0,40 | 0,39 |
| Maniabilité en secondes | 2,14 | 1,77 | 1,60 | 1,91 | 1,64 |
| Résistance à la compression en KN à 2 jours | 39,4 | 68,2 | 86,2 | 85,8 | 98,2 |
| Résistance à la compression en KN à 7 jours | 61,2 | 88,4 | 101,9 | 106,2 | 115,6 |
| Résistance à la compression en KN à 28 jours | 77,6 | - | 116,7 | - | 132,9 |
| Gain de résistance en % à 2 jours | 0 | 73 | 119 | 118 | 149 |
| Gain de résistance en % à 7 jours | 0 | 44 | 66 | 73 | 89 |
| Gain de résistance en % à 28 jours | 0 | - | 50 | - | 71 |

La lecture des résultats du Tableau II ci-dessus permet de mettre en évidence que les propriétés mécaniques de résistance à la compression d'un mortier sont significativement améliorées par la mise en oeuvre, selon l'invention, d'une dispersion de carbonate de calcium contenant l'agent dispersant spécial, même pour des matrices cimentaires fortement dosées en carbonate de calcium.

### EXEMPLE 3 :

Cet exemple concerne la mise en évidence de l'amélioration des propriétés mécaniques d'un mortier apportée par la mise en oeuvre de dispersion de diverses charges.

Dans ce but pour chacun des essais de l'exemple, on verse dans un malaxeur à mortier (EN 196-1) en position marche, les différents constituants du mortier standard dosé à 450 kg/m³ de ciment dont la composition est la suivante :
- 450 g de ciment CEM I 42.5R CP2 de Gaurain conforme à la norme NF P 15-301 ;
- la quantité de dispersion de la charge à tester (à l'exception de l'essai témoin pour lequel aucune suspension n'est mise en oeuvre) ;
- la quantité d'eau nécessaire ;
- une quantité variable en grammes de sable normalisé de Leucate (EN 196-1). Cette quantité de sable étant ajoutée selon la norme EN 196-1 pendant 30 secondes et après 30 secondes d'agitation lente du mélange des constituants précédemment ajoutés.

Les quantités des constituants sont ajustées pour chacun des mortiers des différents essais afin de travailler à compacité constante.

L'expérience a été menée sur des mortiers dont la rhéologie, mesurée au maniabilimètre à mortier défini par la norme NF P 15-412, est comprise entre 1 et 3 secondes.

Après 90 secondes de malaxage, ce dernier est stoppé afin de pouvoir racler les parois du malaxeur.

Une fois terminé le raclage du mortier adhérent sur les parois, le malaxage est repris pendant 1 minute à vitesse rapide.

Le respect de ces temps nous permet d'obtenir un cycle de malaxage qui dure 4 minutes et est conforme à la norme EN 196-1.

Dès la fin du malaxage, les éprouvettes sont constituées et sont placées dans une enceinte climatique humide (EN 196-1) entre 20 et 24 heures puis démoulées, pesées et placées dans un bac de conservation. Ce mode opératoire est conforme à la norme EN 196-1.

A l'âge requis, ces éprouvettes sont sorties de leur enceinte de conservation puis testées en flexion et en compression selon la norme EN 196-1.

### Essai n° 11

Cet essai est un mortier témoin dosé à 450 kg/m³ sans charge avec un rapport eau/ciment E/C égal à 0,55.

### Essai n° 12

Cet essai illustre l'invention et est relatif à un mortier selon l'invention, dosé à 450 kg/m³ avec un rapport E/C égal à 0,59, mettant en oeuvre 10 % en poids sec, par rapport au poids sec de ciment, d'une dispersion aqueuse de fumée de silice à 58,2 % en matière sèche obtenue par dispersion, dans l'eau, de la fumée de silice de diamètre médian égal à 8,99 micromètres mesuré au Sédigraph™ 5100, au moyen de 0,75 %, en poids sec par rapport au poids sec de fumée de silice, d'un copolymère totalement neutralisé à la soude et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion de la fumée de silice sont identiques à ceux de l'essai n° 4.

### Essai n° 13

Cet essai illustre l'invention et est relatif à un mortier selon l'invention, dosé à 450 kg/m³ avec un rapport E/C égal à 0,60, mettant en oeuvre 30 % en poids sec, par rapport au poids sec de ciment, d'une dispersion aqueuse d'un mélange carbonate de calcium-talc (75 % - 25 % en poids) à 60 % en matière sèche obtenue par dispersion, dans l'eau, du mélange de diamètre médian égal à 10 micromètres mesuré au Sédigraph™ 5100, au moyen de 2,5 %, en poids sec par rapport au poids sec du mélange carbonate de calcium-talc, d'un copolymère totalement neutralisé à la soude et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion du mélange carbonate de calcium-talc sont identiques à ceux de l'essai n° 4.

### Essai n° 14

Cet essai illustre l'invention et est relatif à un mortier selon l'invention, dosé à 450 kg/m³ avec un rapport E/C égal à 0,48, mettant en oeuvre 30 % en poids sec, par rapport au poids sec de ciment, d'une dispersion aqueuse de craie à 59,9 % en matière sèche obtenue par dispersion, dans l'eau, de craie d'une granulométrie, telle que 43,7 % des particules ont un diamètre inférieur à 2 micromètres et 14,2 % des particules ont un diamètre inférieur à 1 micromètre, mesurée au Sédigraph™ 5100, au moyen de 0,30 %, en poids sec par rapport au poids sec de craie, d'un copolymère non neutralisé et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion de la craie sont identiques à ceux de l'essai n° 4.

### Essai n° 15

Cet essai illustre l'invention et est relatif à un mortier selon l'invention, dosé à 450 kg/m³ avec un rapport E/C égal à 0,52, mettant en oeuvre 30 % en poids sec, par rapport au poids sec de ciment, d'une dispersion aqueuse de carbonate de calcium précité (appelé PCC) à 59,8 % en matière sèche obtenue par dispersion, dans l'eau, de PCC d'une granulométrie, telle que 69,4 % des particules ont un diamètre inférieur à 2 micromètres et 38,8 % des particules ont un diamètre inférieur à 1 micromètre, mesurée au Sédigraph™ 5100, au moyen de 0,80 %, en poids sec par rapport au poids sec de PCC, d'un copolymère neutralisé à 50 % molaire par de la triéthanolamine et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion du PCC sont identiques à ceux de l'essai n° 4.

### Essai n° 16

Cet essai illustre l'invention et est relatif à un mortier selon l'invention, dosé à 450 kg/m³ avec un rapport E/C égal à 0,52, mettant en oeuvre 30 % en poids sec, par rapport au poids sec de ciment, d'une dispersion aqueuse de dolomie à 59,5 % en matière sèche obtenue par dispersion, dans l'eau, de dolomie d'une granulométrie, telle que 20,5 % des particules ont un diamètre inférieur à 2 micromètres et 11,8 % des particules ont un diamètre inférieur à 1 micromètre, mesurée au Sédigraph™ 5100, au moyen de 0,80 %, en poids sec par rapport au poids sec de dolomie, d'un copolymère neutralisé à 85 % en moles par de l'ammoniaque et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion de la dolomie sont identiques à ceux de l'essai n° 4.

### Essai n° 17

Cet essai illustre l'invention et est relatif à un mortier selon l'invention, dosé à 450 kg/m³ avec un rapport E/C égal à 0,50, mettant en oeuvre 30 % en poids sec, par rapport au poids sec de ciment, d'une dispersion aqueuse de silice à 58,2 % en matière sèche obtenue par dispersion, dans l'eau, de silice d'un diamètre médian égal à 10,51 micromètres mesuré au Sédigraph™ 5100, au moyen de 0,50 %, en poids sec par rapport au poids sec de silice, d'un copolymère totalement neutralisé au lithium et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion de la silice sont identiques à ceux de l'essai n° 4.

### Essai n° 18

Cet essai illustre l'invention et est relatif à un mortier selon l'invention, dosé à 450 kg/m³ avec un rapport E/C égal à 0,56, mettant en oeuvre 10 % en poids sec, par rapport au poids sec de ciment, d'une dispersion aqueuse de zéolithe à 30,6 % en matière sèche obtenue par dispersion, dans l'eau, de zéolithe d'un diamètre médian égal à 2,57 micromètres mesuré au Sédigraph™ 5100, au moyen de 0,50 %, en poids sec par rapport au poids sec de zéolithe, d'un copolymère totalement neutralisé sodium et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion de la zéolithe sont identiques à ceux de l'essai n° 4.

### Essai n° 19

Cet essai illustre l'invention et est relatif à un mortier selon l'invention, dosé à 450 kg/m³ avec un rapport E/C égal à 0,68, mettant en oeuvre 30 % en poids sec, par rapport au poids sec de ciment, d'une dispersion aqueuse de zéolithe à 30,6 % en matière sèche obtenue par dispersion, dans l'eau, de zéolithe d'un diamètre médian égal à 2,57 micromètres mesuré au Sédigraph™ 5100, au moyen de 0,50 %, en poids sec par rapport au poids sec de zéolithe, d'un copolymère totalement neutralisé sodium et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion de la zéolithe sont identiques à ceux de l'essai n° 4.

### Essai n° 20

Cet essai illustre l'invention et est relatif à un mortier selon l'invention, dosé à 450 kg/m³ avec un rapport E/C égal à 0,61, mettant en oeuvre 30 % en poids sec, par rapport au poids sec de ciment, d'une dispersion aqueuse de cendres volantes à 39,2 % en matière sèche obtenue par dispersion, dans l'eau, de cendres volantes d'un diamètre médian égal à 17,69 micromètres mesuré au Sédigraph™ 5100, au moyen de 0,50 %, en poids sec par rapport au poids sec de cendres volantes, d'un copolymère totalement neutralisé sodium et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion des cendres volantes sont identiques à ceux de l'essai n° 4.

### Essai n° 21

Cet essai illustre l'invention et est relatif à un mortier selon l'invention, dosé à 450 kg/m³ avec un rapport E/C égal à 0,55, mettant en oeuvre 30 % en poids sec, par rapport au poids sec de ciment, d'une dispersion aqueuse de diatomite à 42,2 % en matière sèche obtenue par dispersion, dans l'eau, de diatomite d'un diamètre médian égal à 33,32 micromètres mesuré au Sédigraph™ 5100, au moyen de 0,50 %, en poids sec par rapport au poids sec de diatomite, d'un copolymère totalement neutralisé sodium et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion de diatomite sont identiques à ceux de l'essai n° 4.

### Essai n° 22

Cet essai illustre l'invention et est relatif à un mortier selon l'invention, dosé à 450 kg/m³ avec un rapport E/C égal à 0,57, mettant en oeuvre 30 % en poids sec, par rapport au poids sec de ciment, d'une dispersion aqueuse de métakaolin à 33,6 % en matière sèche obtenue par dispersion, dans l'eau, de métakaolin d'un diamètre médian égal à 5,24 micromètres mesuré au Sédigraph™ 5100, au moyen de 0,50 %, en poids sec par rapport au poids sec de métakaolin, d'un mélange composé de 90 % en poids d'un copolymère totalement neutralisé sodium et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.
et 10 % en poids d'un tensio-actif commercialisé par la société BASF sous le nom de Pluronic™ PE 3100.

Le mode opératoire et le matériel mis en oeuvre pour la dispersion de métakaolin sont identiques à ceux de l'essai n° 4.

### Essai n° 23

Cet essai illustre l'invention et est relatif à un mortier selon l'invention, dosé à 450 kg/m³ avec un rapport E/C égal à 0,56, mettant en oeuvre 30 % en poids sec, par rapport au poids sec de ciment, d'une dispersion aqueuse de laitier à 52,4 % en matière sèche obtenue par dispersion, dans l'eau, de laitier d'un diamètre médian égal à 33,71 micromètres mesuré au Sédigraph™ 5100, au moyen de 0,50 %, en poids sec par rapport au poids sec de laitier, d'un copolymère totalement neutralisé à la soude et composé de :
- 5,0 % en poids d'acide méthacrylique ;
- 2,0 % d'acrylamide ;
- 80,0 % en poids de méthacrylate de méthoxy-PEG 750 ;
- 13,0 % en poids de méthacryluréthanne de méthoxy-PEG 750.

Le mode opératoire et le matériel mis en oeuvre pour la dispersion de laitier sont identiques à ceux de l'essai n° 4.

Pour les différents essais, les résultats de mesure de la résistance à la compression à 2 jours, déterminés selon la même méthode que celle décrite dans les exemples précédents, sont rassemblés dans les tableaux IIIa. et IIIb. suivants.

| **ESSAI n °** | **TEMOIN** | **INVENTION** | **INVENTION** | **INVENTION** | **INVENTION** | **INVENTION** |
|---|---|---|---|---|---|---|
| | 11 | 12 | 13 | 14 | 15 | 16 |
| Masse de ciment en g | 450 | 450 | 450 | 450 | 450 | 450 |
| Masse de sable en g | 1569 | 1487 | 1388 | 1436 | 1355 | 1485 |
| Masse de dispersion minérale ou slurry en g | 0 | 181 | 229 | 225 | 226 | 226 |
| Dosage en eau efficace en g | 248 | 267 | 269 | 214 | 233 | 234 |
| Rapport Eau efficace/Ciment | 0,55 | 0,59 | 0,60 | 0,48 | 0,52 | 0,52 |
| Résistance à la compression en KN à 2 jours | 40 | 40,2 | 42,2 | 60,2 | 52,6 | 40,1 |
| Gain de résistance en % à 2 jours | 0 | 0,5 | 5 | 50 | 31 | 0,3 |

| **ESSAI n°** | **INVENTION** | **INVENTION** | **INVENTION** | **INVENTION** | **INVENTION** | **INVENTION** | **INVENTION** |
|---|---|---|---|---|---|---|---|
| | 17 | 18 | 19 | 20 | 21 | 22 | 23 |
| Masse de ciment en g | 450 | 450 | 450 | 450 | 450 | 450 | 450 |
| Masse de sable en g | 1499 | 1494 | 1348 | 1406 | 1395 | 1490 | 1443 |
| Masse de dispersion minérale ou slurry en g | 232 | 147 | 441 | 344 | 319 | 134 | 258 |
| Dosage en eau efficace en g | 225 | 252 | 306 | 275 | 246 | 257 | 252 |
| Rapport Eau efficace/Ciment | 0,50 | 0,56 | 0,68 | 0,61 | 0,55 | 0,57 | 0,56 |
| Résistance à la compression en KN à 2 jours | 47,7 | 52,6 | 44,4 | 45,4 | 51,6 | 43,1 | 44.8 |
| Gain de résistance en % à 2 jours | 19 | 31 | 11 | 13 | 29 | 8 | 12 |

La lecture des résultats des Tableaux IIIa. et IIIb. ci-dessus permet de mettre en évidence que les propriétés mécaniques de résistance aux jeunes âges, à la compression d'un mortier (résistance à 2 jours) sont significativement améliorées par la mise en oeuvre, selon l'invention, d'une dispersion de différentes charges minérales mettant en oeuvre différents agents dispersants.

Il est à noter que l'homme du métier, qui a lu les exemples précédents relatifs à un mortier, pourra prédire sans risque la performance de bétons qui seraient constitués de ces mêmes mortiers auxquels serait ajoutée une proportion de gravillons (d/D).

De même l'évolution des performances de coulis (mortiers auxquels la fraction sable est enlevée) est de même tendance.

## Revendications

1. Procédé visant à incorporer, à la préparation pour matrice cimentaire ou liant hydraulique choisi parmi un béton, un mortier, un béton hydraulique, un coulis ou encore une composition à base de ciment et/ou sulfate de calcium hémihydrate dans le but de lui conférer une résistance mécanique améliorée, une charge minérale choisie parmi le carbonate de calcium naturel (craie, calcite, marbre ou autre carbonate de calcium naturel), le carbonate de calcium précipité, le carbonate de baryum, les roches carbonatées, la dolomie, le talc, la silice broyée, les silices en général, les fumées de silice, les fumées de dioxide de titane, les diatomites, les oxydes de fer les oxydes de manganèse, le dioxyde de titane, la chaux, le kaolin, le méta-kaolin, les argiles, le mica, les plâtres, les cendres volantes, les laitiers, le sulfate de calcium, les zéolites, le basalte, le sulfate de baryum, le trihydroxyde d'aluminium, ou leurs mélanges, sous forme d'une dispersion aqueuse de cette charge minérale, **caractérisé en ce que** ladite charge minérale est en dispersion et **en ce que** ladite dispersion de charge minérale contient un agent dispersant qui consiste en copolymères obtenus par la copolymérisation radicalaire d'au moins un monomère éthylénique uréthanne alkoxy-, uréthanne aryloxy-, uréthanne alkylaryloxy-,uréthanne arylalkyloxy-polyalkylène glycol et plus particulièrement uréthanne alkoxy-polyéthylène glycol avec au moins un monomère anionique et au moins un monomère non ionique en présence éventuelle d'un acrylate ou méthacrylate d'alkoxy-, aryloxy-, alkylaryloxy-, arylalkyloxy-polyalkylène glycol, ou d'un éther allylique d'alkoxy-, aryloxy-, alkylaryloxy-, arylalkyloxy-polyalkylène glycol, ainsi qu'en présence éventuelle de monomères éthyléniques possédant au moins deux doubles liaisons polymérisables, encore appelés réticulants.

2. Procédé selon la revendication 1 **caractérisé en ce que** ledit agent dispersant est un copolymère contenant :
a) de 1 % à 50 % en poids, d'un ou plusieurs monomères anioniques ;
b) de 2 % à 65 % en poids, d'un ou plusieurs monomères non ioniques ;
c) de 3 % à 65 % en poids, d'un monomère éthylénique uréthanne alkoxy-, uréthanne aryloxy-, uréthanne alkylaryloxy-, uréthanne arylalkyloxy-polyalkylène glycol ;
d) de 0 % à 90 % en poids d'un acrylate ou méthacrylate d'alkoxy-, aryloxy-, alkylaryloxy-, arylalkyloxy-polyalkylène glycol, ou d'un éther allylique d'alkoxy-, aryloxy-, alkylaryloxy-, arylalkyloxy-polyalkylène glycol ;
e) de 0 % à 5 % en poids d'un ou plusieurs réticulants, le total des monomères a), b), c), d) et e) étant égal à 100 %.

3. Procédé selon l'une des revendications 1 ou 2 **caractérisé en ce que** le ou les monomères anioniques sont choisis parmi l'acide acrylique, l'acide méthacrylique, l'acide 2-acrylamido-2-méthyl-1-propane sulfonique, l'acide 2-méthacrylamido-2-méthyl-1-propane sulfonique, l'acide 3-méthacrylamido-2-hydroxy-1-propane sulfonique, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl propène sulfonique, l'acide styrène sulfonique, l'acide vinyl sulfonique, le méthallylsulfonate de sodium, l'acrylate ou méthacrylate de sulfoéthyle ou sulfopropyle, le sulfométhylacrylamide, le sulfométhylméthacrylamide, le phosphate de méthacrylate d'éthylène glycol ou encore le phosphate d'acrylate d'éthylène glycol.

4. Procédé selon l'une des revendications 1 ou 2 **caractérisé en ce que** le ou les monomères non ioniques sont choisis parmi l'acrylamide ou le méthacrylamide ou leurs dérivés, les alkyl-esters en C₁ à C₄₀ des acides acryliques ou méthacryliques, les alkoxy-, aryloxy-, alkylaryloxy-, arylalkyloxy-acrylates ou méthacrylates oxyalkylés, oxyarylés, oxyalkylarylés ou oxyarylalkylés (le nombre d'oxyde d'alkylène, d'arylène, d'alkylarylène ou d'arylalkylène étant compris entre 1 et 120), l'acétate de vinyle, la vinylpyrrolidone, le styrène ou encore l'alphaméthyl-styrène et plus particulièrement parmi l'acrylamide ou l'acrylate d'éthyle.

5. Procédé selon l'une des revendications 1 ou 2 **caractérisé en ce que** le ou les monomères uréthanne alkoxy-, uréthanne aryloxy-,uréthanne alkylaryloxy-uréthanne arylalkyloxy-polyalkylène glycol sont choisis parmi les produits de réaction de alkoxy-polyalkylène glycol avec un isocyanate insaturé polymérisable et plus particulièrement parmi les produits de réaction de méthoxy-polyéthylène glycol avec un isocyanate acrylique, méthacrylique, vinylique ou encore allylique.

6. Procédé selon l'une des revendications 1 ou 2 **caractérisé en ce que** l'ester acrylique ou méthacrylique d'alkyloxy-, aryloxy-, alkylaryloxy-, arylalkyloxy-polyalkylène glycol est un acrylate ou méthacrylate de méthoxy-polyéthylène glycol, ledit polyéthylène glycol ayant un poids moléculaire supérieur à 300.

7. Procédé selon l'une des revendications 1 ou 2 **caractérisé en ce que** le ou les monomères réticulants sont choisis dans le groupe constitué par le diméthacrylate d'éthylène glycol, le divinylacétylène, le divinylbenzène, le triméthylolpropanetriacrylate, l'acrylate d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose.

8. Procédé selon l'une quelconque des revendications 1 à 7 **caractérisé en ce que** l'agent dispersant est fractionné ultérieurement à l'étape de polymérisation.

9. Procédé selon l'une quelconque des revendications 1 à 8 **caractérisé en ce que** l'agent dispersant est mis en oeuvre sous sa forme totalement acide.

10. Procédé selon l'une quelconque des revendications 1 à 8 **caractérisé en ce que** l'agent dispersant est mis en oeuvre sous sa forme partiellement neutralisée ou totalement neutralisée par un ou plusieurs agents de neutralisation disposant d'une fonction monovalente et éventuellement d'une fonction polyvalente.

11. Procédé selon la revendication 10 **caractérisé en ce que** les agents de neutralisation disposant d'une fonction monovalente sont choisis dans le groupe constitué par les composés contenant des cations alcalins, en particulier le sodium et le potassium ou encore le lithium, l'ammonium, ou bien les amines primaires ou secondaires aliphatiques et/ou cycliques telles que les éthanolamines, la mono et diéthylamine ou encore la cyclohexylamine.

12. Procédé selon la revendication 10 **caractérisé en ce que** les agents de neutralisation disposant d'une fonction polyvalente sont choisis dans le groupe constitué par les composés contenant des cations divalents alcalino-terreux, en particulier le magnésium et le calcium ou encore le zinc, de même que par les cations trivalents, dont en particulier l'aluminium ou encore par certains composés contenant des cations de valence plus élevée.

13. Matrice cimentaire ou liant hydraulique choisi parmi un béton, un mortier, un béton hydraulique, un coulis ou encore une composition à base de ciment et/ou sulfate de calcium hémihydrate **caractérisé en ce qu'**il contient une charge minérale sous forme de dispersion aqueuse, **en ce qu'**elle contient un agent dispersant qui consiste en copolymères obtenus par la copolymérisation radicalaire d'au moins un monomère éthylénique uréthanne alkoxy-, uréthanne aryloxy-, uréthanne alkylaryloxy-, uréthanne arylalkyloxy-polyalkylène glycol et plus particulièrement uréthanne alkoxy-polyéthylène glycol avec au moins un monomère anionique et au moins un monomère non ionique en présence éventuelle d'un acrylate ou méthacrylate d'alkoxy-, aryloxy-, alkylaryloxy-, arylalkyloxy-polyalkylène glycol, ou d'un éther allylique d'alkoxy-, aryloxy-, alkylaryloxy-, arylalkyloxy-polyalkylène glycol, ainsi qu'en présence éventuelle de monomères éthyléniques possédant au moins deux doubles liaisons polymérisables, encore appelés réticulants, et **caractérisé en ce que** les charges minérales sont choisies parmi carbonate de calcium naturel (craie, calcite, marbre ou autre carbonate de calcium naturel), le carbonate de calcium précipité, le carbonate de baryum, les roches carbonatées, la dolomie, le talc, la silice broyée, les silices en général, les fumées de silice, les fumées de dioxide de titane, les diatomites, les oxydes de fer, les oxydes de manganèse, le dioxyde de titane, la chaux, le kaolin, le méta-kaolin, les argiles, le mica, les plâtres, les cendres volantes, les laitiers, le sulfate de calcium, les zéolites, le basalte, le sulfate de baryum, le trihydroxyde d'aluminium, ou leurs mélanges.

14. Matrice cimentaire ou liant hydraulique selon la revendication 13 **caractérisé en ce que** le copolymère, utilisé selon l'invention comme agent dispersant apportant une amélioration à la résistance à la compression des matrices cimentaires ou liants hydrauliques, contient :
a) de 1 % à 50 % en poids, d'un ou plusieurs monomères anioniques ;
b) de 2 % à 65 % en poids, d'un ou plusieurs monomères non ioniques ;
c) de 3 % à 65 % en poids, d'un monomère éthylénique uréthanne d'alkyloxy-, uréthanne aryloxy-, uréthanne alkylaryloxy-, uréthanne arylalkyloxy-polyalkylène glycol ;
d) de 0 % à 90 % en poids d'un acrylate ou méthacrylate d'alkyloxy-, aryloxy-, alkylaryloxy-, arylalkyloxy-polyalkylène glycol ;
e) de 0 % à 5 % en poids d'un ou plusieurs réticulants,
le total des monomères a), b), c), d) et e) étant égal à 100 %.

15. Matrice cimentaire ou liant hydraulique selon l'une des revendications 13 ou 14 **caractérisé en ce que** le ou les monomères anioniques sont choisis parmi l'acide acrylique, l'acide méthacrylique, l'acide 2-acrylamido-2-méthyl-1-propane sulfonique, l'acide 2-méthacrylamido-2-méthyl-1-propane sulfonique, l'acide 3-méthacrylamido-2-hydroxy-1-propane sulfonique, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl propène sulfonique, l'acide styrène sulfonique, l'acide vinyl sulfonique, le méthallylsulfonate de sodium, l'acrylate ou méthacrylate de sulfoéthyle ou sulfopropyle, le sulfométhylacrylamide, le sulfométhylméthacrylamide, le phosphate de méthacrylate d'éthylène glycol ou encore le phosphate d'acrylate d'éthylène glycol.

16. Matrice cimentaire ou liant hydraulique selon l'une des revendications 13 ou 14 **caractérisé en ce que** le ou les monomères non ioniques sont choisis parmi l'acrylamide ou le méthacrylamide ou leurs dérivés, les alkyl-esters en C₁ à C₄₀ des acides acryliques ou méthacryliques, les alkoxy acrylates ou méthacrylates oxyalkylés, oxyarylés, oxyalkylarylés, oxyarylalkylés (le nombre d'oxyde d'alkylène, d'arylène, d'alkylarylène, d'arylalkylène étant compris entre 1 et 120), l'acétate de vinyle, la vinylpyrrolidone, le styrène ou encore l'alphaméthyl-styrène et plus particulièrement parmi l'acrylamide ou l'acrylate d'éthyle.

17. Matrice cimentaire ou liant hydraulique selon l'une des revendications 13 ou 14 **caractérisé en ce que** le ou les monomères uréthanne d'alkoxy-, uréthanne aryloxy-, uréthanne alkylaryloxy-, uréthanne arylalkyloxy-polyalkylène glycol sont choisis parmi les produits de réaction de alkoxy-polyalkylène glycol avec un isocyanate insaturé polymérisable et plus particulièrement parmi les produits de réaction de méthoxy-polyéthylène glycol avec un isocyanate acrylique, méthacrylique, vinylique ou encore allylique.

18. Matrice cimentaire ou liant hydraulique selon l'une des revendications 13 ou 14 **caractérisé en ce que** l'ester acrylique ou méthacrylique d'alkyloxy-, aryloxy-, alkylaryloxy-, arylalkyloxy-polyalkylène glycol est un acrylate ou méthacrylate de méthoxy-polyéthylène glycol, ledit polyéthylène glycol ayant un poids moléculaire supérieur à 300.

19. Matrice cimentaire ou liant hydraulique l'une des revendications 13 ou 14 **caractérisé en ce que** le ou les monomères réticulants sont choisis dans le groupe constitué par le diméthacrylate d'éthylène glycol, le divinylacétylène, le divinylbenzène, le triméthylolpropanetriacrylate, l'acrylate d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose.

20. Matrice cimentaire ou liant hydraulique selon l'une quelconque des revendications 13 à 19 **caractérisé en ce que** l'agent dispersant est mis en oeuvre sous sa forme totalement acide.

21. Matrice cimentaire ou liant hydraulique selon l'une quelconque des revendications 13 à 20 **caractérisé en ce que** l'agent dispersant est mis en oeuvre sous sa forme partiellement neutralisée ou totalement neutralisée par un ou plusieurs agents de neutralisation disposant d'une fonction monovalente et éventuellement d'une fonction polyvalente.

22. Matrice cimentaire ou liant hydraulique selon la revendication 21 **caractérisé en ce que** les agents de neutralisation disposant d'une fonction monovalente sont choisis dans le groupe constitué par les composés contenant des cations alcalins, en particulier le sodium et le potassium ou encore le lithium, l'ammonium, ou bien les amines primaires ou secondaires aliphatiques et/ou cycliques telles que les éthanolamines, la mono et diéthylamine ou encore la cyclohexylamine.

23. Matrice cimentaire oubliant hydraulique selon la revendication 21 **caractérisé en ce que** les agents de neutralisation disposant d'une fonction polyvalente sont choisis dans le groupe constitué par les composés contenant des cations divalents alcalino-terreux, en particulier le magnésium et le calcium ou encore le zinc, de même que par les cations trivalents, dont en particulier l'aluminium ou encore par certains composés contenant des cations de valence plus élevée.

24. Matrice cimentaire ou liant hydraulique selon l'une quelconque des revendications 13 à 23 **caractérisé en ce qu'**il est un béton, un mortier, un béton hydraulique, un coulis ou encore une composition à base de ciment et/ou sulfate de calcium hémihydrate.

25. Utilisation des matrices cimentaires selon l'une quelconque des revendications 13 à 24 dans les domaines de la construction, du bâtiment, des travaux publics, des ouvrages d'art, des travaux offshore, des ciments pétroliers et des services parapétroliers.

## Claims

1. A method intended to incorporate, in the preparation for a cement matrix or hydraulic binder chosen from among a concrete, a mortar, a hydraulic concrete, a slurry, or a cement- and/or calcium hemihydrate-based composition, for the purpose of imparting to it an improved mechanical resistance, a mineral load chosen from among natural calcium carbonate (chalk, calcite, marble, or another natural calcium carbonate), precipitated calcium carbonate, barium carbonate, carbonated rocks, dolomite, talc, ground silica, silicas in general, silica fumes, titanium dioxide fumes, diatomites, iron oxides, manganese oxides, titanium dioxide, lime, kaolin, metakaolin, clays, mica, plasters, fly ash, slags, calcium sulfate, zeolites, basalt, baryum sulfate, aluminium trihydroxide, or mixtures thereof, in the form of an aqueous dispersion of this mineral load, **characterized in that** said mineral load is in a dispersion and **in that** said mineral load dispersion contains a dispersing agent that consists of copolymers obtained by radical copolymerization of at least one ethylenic urethane alkoxy-, urethane aryloxy-, urethane alkylaryloxy-, urethane arylalkyloxy-polyalkylene glycol monomer, and more particularly alkoxy-polyethylene glycol urethane monomer with at least one anionic monomer and at least one non-ionic monomer potentially in the presence of an alkoxy-, aryloxy-, alkylaryloxy-, arylalkyloxy-polyalkylene glycol acrylate or methacrylate, or an allylic ether of alkoky-, aryloxy-, alkylaryloxy-, arylalkyloxy-polyalkylene glycol, as well as potentially in the presence of ethylenic monomers possessing at least two polymerizable double bonds, also known as cross-linking agents.

2. A method according to claim 1, **characterized in that** said dispersing agent is a copolymer containing:
a) 1 to 50% by weight of one or more anionic monomers;
b) 2% to 65% by weight of one or more nonionic monomers;
c) 3% to 65% by weight of an ethylenic urethane alkoxy-, urethane aryloxy-, urethane alkylaryloxy-, or urethane arylalkyloxy-polyalkylene glycol monomer;
d) 0% to 90% by weight of an alkoxy-, aryloxy-, alkylaryloxy-, arylalkyloxy-polyalkylene glycol acrylate or methacrylate, or an alkoxy-, aryloxy-, alkylaryloxy-, arylalkyloxy-polyalkylene glycol allylic ether;
e) 0% to 5% by weight of one or more cross-linking agents, the total of monomers a), b), c), d) and e) being equal to 100%.

3. A method according to one of the claims 1 or 2, **characterized in that** the anionic monomer(s) are chosen from among acrylic acid, methacrylic acid, 2-acrylamido-2-methyl-1-propane sulphonic acid, 2-methacrylamido-2-methyl-1-propane sulphonic acid, 3-methacrylamido-2-hydroxy-1-propane sulphonic acid, allylsulphonic acid, methallylsulphonic acid, sulphonic allyloxybenzene acid, sulphonic methallyloxybenzene acid, 2-hydroxy-3-(2-propenyloxy)propane sulphonic acid, 2-methyl-2-propene-l-sulphonic acid, ethylene sulphonic acid, propene sulphonic acid, 2-methyl propene sulphonic acid, styrene sulphonic acid, vinyl sulphonic acid, sodium methallylsulphonate, sulphoethyl or sulphopropyl acrylate and methacrylate, sulphomethylacrylamide, sulphomethylmethacrylamide, ethylene glycol methacrylate phosphate, or ethylene glycol acrylate phosphate.

4. A method according to one of the claims 1 or 2, **characterized in that** the nonionic monomers are chosen from among acrylamide or methacrylamide or derivatives thereof, C1-C40 alkylesters of acrylic or methacrylic acids, oxyalkylated, oxyarylated, oxyalkylarylated, or oxyarylalkylated alkoxy-, aryloxy- alkylaryloxy-, arylaklyloxy-acrylates, or methacrylates (the number of alkylene, arylene, alkylarylene, or arylalkylene oxides being between 1 and 120), vinyl acetate, vinylpyrrolidone, styrene, or alphamethyl-styrene, and more particularly from among acrylamide or ethyl acrylate.

5. A method according to one of the claims 1 or 2, **characterized in that** the urethane alkoxy-, urethane aryloxy-, urethane alkylaryloxy-, or urethane arylalkyloxy-polyalkylene glycol monomer(s) are chosen from among the alkoxy-polyalkylene glycol reaction products with a polymerizable unsaturated isocynate, and more particularly from among methoxy-polyethylene glycol reaction products with an acrylic, methacrylic, vinylic, or allylic isocyanate.

6. A method according to one of the claims 1 or 2, **characterized in that** the acrylic or methacrylic ester of alkyloxy-, aryloxy-, alkylaryloxy-, or arylalkyloxy-polyalkylene glycol is an acrylate or methacrylate of methoxy-polyethylene glycol, said polyethylene glycol having a molecular weight greater than 300.

7. A method according to one of the claims 1 or 2, **characterized in that** the cross-linking monomers are chosen from among the group made up of ethylene glycol dimethacrylate, divinylacetylene, divinylbenzene, trimethylolpropanetriacrylate, allyl acrylate, methylene-bis-acrylamide, methylene-bis-methacrylamide, tetrallyloxyethane, triallylcyanurates, and allylic ethers obtained from polyols such as pentaerythritol, sorbitol, and sucrose.

8. A method according to one of the claims 1 to 7, **characterized in that** the dispersing agent is fragmented after the polymerization step.

9. A method according to one of the claims 1 to 8, **characterized in that** the dispersing agent is implemented in its fully acidic form.

10. A method according to one of the claims 1 to 8, **characterized in that** the dispersing agent is implemented in its partially or fully neutralized form by one or more neutralization agents having a monovalent function, and potentially a polyvalent function.

11. A method according to claim 10, **characterized in that** the neutralization agents having a monovalent function are chosen from among the group made up by compounds containing alkaline cations, in particular sodium and potassium, or lithium, ammonium, or the aliphatic and/or cyclic primary or secondary amines, such as ethanolamines, mono- and diethylamine, or cyclohexylamine.

12. A method according to claim 10, **characterized in that** the neutralization agents having a polyvalent function are chosen from among the group made up of compounds containing alkaline-earth divalent cations, in particular magnesium and calcium or even zinc, as with trivalent cations, particularly including aluminium or by certain compounds containing higher-valence cations.

13. A cement matrix or hydraulic binder chosen from among a concrete, a mortar, a hydraulic concrete, a slurry, or a cement- and/or calcium hemihydrate-based composition, **characterized in that** it contains a mineral load in the form of an aqueous dispersion, and **in that** it contains a dispersing agent which consists of copolymers obtained by radical copolymerization of at least one ethylenic urethane alkoxy-, urethane aryloxy-, urethane alkylaryloxy-, urethane arylalkyloxy-polyalkylene glycol monomer, and more particularly alkoxy-polyethylene glycol urethane monomer with at least one anionic monomer and at least one non-ionic monomer potentially in the presence of an alkoxy-, aryloxy-, alkylaryloxy-, arylalkyl-oxy-polyalkylene glycol acrylate or methacrylate, as well as potentially in the presence of ethylenic monomers possessing at least two polymerizable double bonds, also known as cross-linking agents, and
**characterized in that** the mineral loads are chosen from among natural calcium carbonate (chalk, calcite, marble, or another natural calcium carbonate, precipitated calcium carbonate, barium carbonate, carbonated rocks, dolomite, talc, ground silica, silicas in general, silica fumes, titanium dioxide fumes, diatomites, iron oxides, manganese oxides, titanium dioxide, lime, kaolin, metakaolin, clays, mica, plasters, fly ash, slags, calcium sulfate, zeolites, basalt, baryum sulfate, aluminium trihydroxide, or mixtures thereof.

14. A cement matrix or hydraulic binder according to claim 13, **characterized in that** the copolymer, used according to the invention as a dispersing agent improving the compression strength of cement matrices or hydraulic binders, contains:
a) 1 to 50% by weight of one or more anionic monomers;
b) 2% to 65% by weight of one or more nonionic monomers;
c) 3% to 65% by weight of an ethylenic urethane alkyloxy-, urethane aryloxy-, urethane alkylaryloxy-, or urethane arylalkyloxy-polyalkylene glycol monomer;
d) 0% to 90% by weight of an alkyloxy-, aryloxy-, alkylaryloxy-, arylalkyloxy-polyalkylene glycol;
e) 0% to 5% by weight of one or more cross-linking agents, the total of monomers a), b), c), d) and e) being equal to 100%.

15. A cement matrix according to one of the claims 13 or 14, **characterized in that** the anionic monomer(s) are chosen from among acrylic acid, methacrylic acid, 2-acrylamido-2-methyl-1-propane sulphonic acid, 2-methacrylamido-2-methyl-1-propane sulphonic acid, 3-methacrylamido-2-hydroxy-1-propane sulphonic acid, allylsulphonic acid, methallylsulphonic acid, sulphonic methallyloxybenzene acid, sulphonic allyloxybenzene acid 2-hydroxy-3-(2-propenyloxy)propane sulphonic acid, 2-methyl-2-propene-1-sulphonic acid, ethylene sulphonic acid, propene sulphonic acid, 2-methyl propene sulphonic acid, styrene sulphonic acid, vinyl sulphonic acid, sodium methallylsulphonate, sulphoethyl or sulphopropyl acrylate and methacrylate, sulphomethylacrylamide, sulphomethylmethacrylamide, ethylene glycol methacrylate phosphate, or ethylene glycol acrylate phosphate.

16. A cement matrix or cement binder according to one of the claims 13 or 14 **characterized in that** the nonionic monomers are chosen from among acrylamide or methacrylamide or derivatives thereof, C1-C40 alkylesters of acrylic or methacrylic acids, oxyalkylated, oxyarylated, oxyalkylarylated, or oxyarylalkylated alkoxy-, aryloxy- alkylaryloxy-, arylaklyloxy-acrylates, or methacrylates (the number of alkylene, arylene, alkylarylene, or arylalkylene oxides being between 1 and 120), vinyl acetate, vinylpyrrolidone, styrene, or alphamethyl-styrene, and more particularly from among acrylamide or ethyl acrylate.

17. A cement matrix or hydraulic binder according to one of the claims 13 or 14, **characterized in that** the urethane alkoxy-, urethane aryloxy-, urethane alkylaryloxy-, or urethane arylalkyloxy-polyalkylene glycol monomer(s) are chosen from among the alkoxy-polyalkylene glycol reaction products with a polymerizable unsaturated isocynate, and more particularly from among methoxy-polyethylene glycol reaction products with an acrylic, methacrylic, vinylic, or allylic isocyanate.

18. A cement matrix according to one of the claims 13 or 14, **characterized in that** the acrylic or methacrylic ester of alkyloxy-, aryloxy-, alkylaryloxy-, arylalkyloxy-polyalkylene glycol is an acrylate or methacrylate of methoxy-polyethylene glycol, said polyethylene glycol having a molecular weight greater than 300.

19. A cement matrix or hydraulic binder according to one of the claims 13 or 14, **characterized in that** the cross-linking monomers are chosen from among the group made up of ethylene glycol dimethacrylate, divinylacetylene, divinylbenzene, trimethylolpropanetriacrylate, allyl acrylate, methylene-bis-acrylamide, methylene-bis-methacrylamide, tetrallyloxyethane, triallylcyanurates, and allylic ethers obtained from polyols such as pentaerythritol, sorbitol, and sucrose.

20. A cement matrix or hydraulic binder according to one of the claims 13 to 19, **characterized in that** the dispersing agent is implemented in its fully acidic form.

21. A cement matrix or hydraulic binder according to one of the claims 13 to 20, **characterized in that** the dispersing agent is implemented in its partially or fully neutralized form by one or more neutralization agents having a monovalent function, and potentially a polyvalent function.

22. A cement matrix or hydraulic binder according to claim 21, **characterized in that** the neutralization agents having a monovalent function are chosen from among the group made up by compounds containing alkaline cations, in particular sodium and potassium, or lithium, ammonium, or the aliphatic and/or cyclic primary or secondary amines, such as ethanolamines, mono- and diethylamine, or cyclohexylamine.

23. A cement matrix or hydraulic binder according to claim 21, **characterized in that** the neutralization agents having a polyvalent function are chosen from among the group made up of compounds containing alkaline-earth divalent cations, in particular magnesium and calcium or even zinc, as with trivalent cations, particularly including aluminium or by certain compounds containing higher-valence cations.

24. A cement matrix or hydraulic binder according to any of the claims 13 to 23, **characterized in that** it is a concrete, a mortar, a hydraulic concrete, a slurry, or a cement- and/or calcium hemihydrate-based composition

25. The use of cement matrices according to any one of the claims 13 to 24 in the fields of construction, of building, of public works, of artworks, of offshore work, of petroleum cements, and parapetrolic services.

## Patentansprüche

1. Verfahren zum Beimischen, in die Vorbereitung für eine Zementmatrix oder ein hydraulisches Bindemittel, gewählt unter Beton, Mörtel, einer Vergießmasse oder auch einer Zement- und/oder Calciumsulfat-Halbhydrat-Zusammensetzung mit dem Ziel, ihr eine verbesserte mechanische Festigkeit zu verleihen, eines mineralischen Füllstoffs, gewählt unter einem natürlichen Calciumcarbonat (Kreide, Kalkspat, Marmor oder sonstiges natürliches Calciumcarbonat), einem gefällten Calciumcarbonat, einem Bariumcarbonat, Carbonatgesteinen, Dolomiten, Talk, gemahlener Silika, Silika allgemein, Silika-Stäuben, Titandioxid-Stäuben, Diatomiten, Eisenoxiden, Magnesiumoxiden, Titandioxid, Kalk, Kaolin, Meta-Kaolin, Ton, Glimmer, Gipsen, Flugstäuben, Schlacken, Calciumsulfat, Zeolithen, Basalt, Bariumsulfat, Aluminiumtrihydroxid oder deren Mischungen, in der Form einer wässrigen Dispersion dieses mineralischen Füllstoffes, **dadurch gekennzeichnet, dass** der besagte mineralische Füllstoff eine Dispersion ist, und dass die besagte mineralische Füllstoffdispersion ein Dispergiermittel enthält, welches aus Copolymeren besteht, die durch die radikalische Copolymerisation mindestens eines ethylenischen Urethan-Alkoxy-, Urethan-Aryloxy-, Urethan-Alkylaryloxy-, Urethan-Arylalkyloxy-Polyalkylenglykol-Monomers und insbesondere eines ethylenischen Urethan-Alkoxypolyethylenglykol-Monomers mit mindestens einem anionischen Monomer und mindestens einem nicht-ionischen Monomer in eventueller Gegenwart eines Alkoxypolyalkylenglykol-, Aryloxypolyalkylenglykol-, Alkylaryloxypolyalkylenglykol-, Arylalkyloxypolyalkylenglykol-Acrylates oder -Methacrylates oder eines Alkoxy-, Aryloxy-, Alkylaryloxy-, Arylalkyloxy-Polyalkylenglykol-Allylethers, sowie in eventueller Gegenwart von ethylenischen Monomeren mit mindestens zwei polymerisierbaren Doppelbindungen, auch Vernetzungsmittel genannt, gewonnen wurden.

2. Verfahren nach Anspruch 1, **dadurch gekennzeichnet, dass** das besagte Dispergiermittel ein Copolymer mit folgenden Bestandteilen ist:
a) Von 1 bis 50 Gewichtsprozent eines oder mehrerer anionische Monomere;
b) von 2 bis 65 Gewichtsprozent eines oder mehrerer nicht-ionische Monomere;
c) von 3 bis 65 Gewichtsprozent eines ethylenischen Urethan-Alkoxy-, Urethan-Aryloxy-, Urethan-Alkylaryloxy-, Urethan-Arylalkyloxy-Polyalkylenglykol-Monomers;
d) von 0 bis 90 Gewichtsprozent eines Alkoxypolyalkylenglykol-, Aryloxypolyalkylenglykol-, Alkylaryloxypolyalkylenglykol-, Arylalkyloxypolyalkylenglykol-Acrylates oder -Methacrylates, oder eines Alkoxy-, Aryloxy-, Alkylaryloxy-, Arylalkyloxy-Polyalkylenglykol-Allylethers;
e) von 0 bis 5 Gewichtsprozent eines oder mehrerer Vernetzungsmittel, wobei die Summe der Monomere a), b), c), d) und e) gleich 100 % ist.

3. Verfahren nach einem der Ansprüche 1 oder 2, **dadurch gekennzeichnet, dass** das oder die anionische(n) Monomer(e) unter Acrylsäure, Methacrylsäure, 2-Acrylamido-2-Methyl-1-Propansulfonsäure, 2-Methacrylamido-2-Methyl-1-Propansulfonsäure, 3-Methacrylamido-2-Hydroxy-1-Propansulfonsäure, Allylsulfonsäure, Methallylsulfonsäure, Allyloxybenzolsulfonsäure, Methallyloxybenzolsulfonsäure, 2-Hydroxy-3-(2-propenyloxy)Propansulfonsäure, 2-Methyl-2-Propen-1-Sulfonsäure, Ethylensulfonsäure, Propensulfonsäure, 2-Methylpropensäure, Styrolsulfonsäure, Vinylsulfonsäure, Natriummethallylsulfonat, Sulfoethylacrylat oder -methacrylat oder Sulfopropylacrylat oder - methacrylat, Sulfomethylacrylamid, Sulfomethylmethacrylamid, Ethylenglykolmethacrylatphosphat oder auch Ethylenglycolacrylatphosphat gewählt wird/werden.

4. Verfahren nach einem der Ansprüche 1 oder 2, **dadurch gekennzeichnet, dass** das oder die nicht-ionische(n) Monomer(e) unter Acrylamid oder Methacrylamid oder deren Derivaten, C1-C40-Alkylestern der Acryl- oder Methalcrylsäuren, oxyalkylierten, oxyarylierten, oxyalkylarylierten oder oxyarylalkylierten Alkoxy-, Aryloxy-, Alkylaryloxy-, Arylalkyloxyacrylaten oder -methacrylaten (wobei die Zahl des Alkylen-, Arylen-, Alkylarylen- oder Arylalkylenoxids zwischen 1 und 120 liegt), Vinylacetat, Vinylpyrrolidon, Styrol oder auch Alphamethylstyrol und insbesondere unter Ethylacrylamid oder Ethylacrylat gewählt wird/werden.

5. Verfahren nach einem der Ansprüche 1 oder 2, **dadurch gekennzeichnet, dass** das oder die Urethan-Alkoxy-, Urethan-Aryloxy-, Urethan-Alkylaryloxy-, Urethan-Arylalkyloxy-Polyalkylenglykol-Monomer(e) unter den Reaktionsprodukten von Alkoxy-Polyalkylenglykol mit einem polymerisierbaren ungesättigten Isocyanat, und insbesondere unter den Reaktionsprodukten von Methoxy-Polyethylenglykol mit einem Acryl-, Methacryl-, Vinyl- oder auch Allylisocyanat gewählt wird/werden.

6. Verfahren nach einem der Ansprüche 1 oder 2, **dadurch gekennzeichnet, dass** der Alkyloxy-, Aryloxy-, Alkylaryloxy-, Arylalkyloxy-Polyalkylenglykol-Acryl- oder -Methacrylester ein Methoxypolyethylenglykol-Acrylat oder - Methacrylat ist, wobei das Molekulargewicht des besagten Polyethylenglykols mehr als 300 beträgt.

7. Verfahren nach einem der Ansprüche 1 oder 2, **dadurch gekennzeichnet, dass** das oder die Vernetzungsmonomer(e) in einer Gruppe bestehend aus Ethylenglykoldimethacrylat, Divinylacetylen, Divinylbenzol, Trimethylolpropantriacrylat, Allylacrylat, Methylenbisacrylamid, Methylenbismethacrylamid, Tetrallyloxyethan, Triallylcyanuraten, aus Polylolen wie beispielsweise Pentaerythritol gewonnenen Allylethem, Sorbitol, Sucrose gewählt wird/werden.

8. Verfahren nach einem beliebigen der Ansprüche 1 bis 7, **dadurch gekennzeichnet, dass** das Dispergiermittel nach dem Schritt der Polymerisation fraktioniert wird.

9. Verfahren nach einem beliebigen der Ansprüche 1 bis 8, **dadurch gekennzeichnet, dass** das Dispergiermittel in seiner vollständigen Säureform umgesetzt wird.

10. Verfahren nach einem beliebigen der Ansprüche 1 bis 8, **dadurch gekennzeichnet, dass** das Dispergiermittel in seiner anhand eines oder mehrerer Neutralisationsmittel mit einer monovalenten Funktion und gegebenenfalls mit einer polyvalenten Funktion teilweise oder vollständig neutralisierten Form umgesetzt wird.

11. Verfahren nach Anspruch 10, **dadurch gekennzeichnet, dass** die Neutralisationsmittel mit einer monovalenten Funktion aus der Gruppe bestehend aus den Alkalikationen, insbesondere Natrium und Kalium oder auch Lithium, Ammonium oder aliphatische und/oder cyclische primäre oder sekundäre Amine wie beispielsweise Ethanolamine, Mono- und Diethylamin oder auch Cyclohexylamin, enthaltenden Verbindungen gewählt werden.

12. Verfahren nach Anspruch 10, **dadurch gekennzeichnet, dass** die Neutralisationsmittel mit einer polyvalenten Funktion aus der Gruppe bestehend aus den zweiwertige Erdalkalikationen, insbesondere Magnesium und Calcium oder auch Zink, enthaltenden Verbindungen, sowie aus dreiwertige Kationen, darunter insbesondere Aluminium, oder auch bestimmte Kationen mit einer höheren Valenz enthaltenden Verbindungen gewählt werden.

13. Zementmatrix oder hydraulisches Bindemittel, gewählt unter Beton, Mörtel, einem hydraulischen Beton, einer Vergießmasse oder auch einer Zement- und/oder Calciumsulfat-Halbhydrat-Zusammensetzung, **dadurch gekennzeichnet, dass** sie/es einen mineralischen Füllstoff in der Form einer wässrigen Dispersion enthält, dass sie/es ein Dispergiermittel bestehend aus Copolymeren, welche durch die radikalische Copolymerisation mindestens eines ethylenischen Urethan-Alkoxy-, Urethan-Aryloxy-, Urethan-Alkylaryloxy-, Urethan-Arylalkyloxy-Polyalkylenglykol-Monomers und insbesondere eines ethylenischen Urethan-Alkoxy-Polyethylnglykol-Monomers mit mindestens einem anionischen Monomer und mindestens einem nicht-ionischen Monomer in eventueller Gegenwart eines Alkoxy-, Aryloxy-, Alkylaryloxy-, Arylalkyloxy-Polyalkylenglykol-Acrylates oder eines Alkoxy-, Aryloxy-, Alkylaryloxy-, Arylalkyloxy-Polyalkylenglykol-Allylethers, sowie in eventueller Gegenwart von ethylenischen Monomeren mit mindestens zwei polymerisierbaren Doppelbindungen, auch Vernetzungsmittel genannt, gewonnen werden, und **dadurch gekennzeichnet, dass** die mineralischen Füllstoffe unter natürlichem Calciumcarbonat (Kreide, Kalkspat, Marmor oder einem sonstigen natürlichen Calciumcarbonat), gefälltem Calciumcarbonat, Bariumcarbonat, Carbonatgesteinen, Dolomiten, Talk, gemahlener Silika, Silika allgemein, Silika-Stäuben, Titandioxid-Stäuben, Diatomiten, Eisenoxiden, Magnesiumoxiden, Titanoxiden, Kalk, Kaolin, Metakaolin, Ton, Glimmer, Gipsen, Flugstäuben, Schlacken, Calciumsulfat, Zeolith, Basalt, Bariumsulfat, Aluminiumtrihydroxid oder einem Gemisch daraus gewählt werden.

14. Zementmatrix oder hydraulisches Bindemittel nach Anspruch 13, **dadurch gekennzeichnet, dass** das Copolymer, welches gemäß der Erfindung als ein eine verbesserte Druckfestigkeit der Zementmatrizen oder hydraulischen Bindemittel gewährleistendes Dispergiermittel verwendet wird, enthält:
a) Von 1 bis 50 Gewichtsprozent eines oder mehrerer anionische Monomere;
b) von 2 bis 65 Gewichtsprozent eines oder mehrerer nicht-ionische Monomere;
c) von 3 bis 65 Gewichtsprozent eines ethylenischen Urethan-Alkoxy-, Urethan-Aryloxy-, Urethan-Alkylaryloxy-, Urethan-Arylalkyloxy-Polyalkylenglykol-Monomers;
d) von 0 bis 90 Gewichtsprozent eines Alkyloxypolyalkylenglykol-, Aryloxypolyalkylenglykol-, Alkylaryloxypolyalkylenglykol-, Arylalkyloxypolyalkylenglykol-Acrylates oder -Methacrylates;
e) von 0 bis 5 Gewichtsprozent eines oder mehrerer Vernetzungsmittel, wobei die Summe der Monomere a), b), c), d) und e) gleich 100 % ist.

15. Zementmatrix oder hydraulisches Bindemittel nach einem der Ansprüche 13 oder 14, **dadurch gekennzeichnet, dass** das oder die anionische(n) Monomer(e) unter Acrylsäure, Methacrylsäure, 2-Acrylamido-2-Methyl-1-Propansulfonsäure, 2-Methacrylamido-2-Methyl-1-Propansulfonsäure, 3-Methacrylamido-2-Hydroxy-1-Propansulfonsäure, Allylsulfonsäure, Methallylsulfonsäure, Allyloxybenzolsulfonsäure, Methallyloxybenzolsulfonsäure, 2-Hydroxy-3-(2-propenyloxy)Propansulfonsäure, 2-Methyl-2-Propen-1-Sulfonsäure, Ethylensulfonsäure, Propensulfonsäure, 2-Methylpropensäure, Styrolsulfonsäure, Vinylsulfonsäure, Natriummethallylsulfonat, Sulfoethylacrylat oder -methacrylat oder Sulfopropylacrylat oder - methacrylat, Sulfomethylacrylamid, Sulfomethylmethacrylamid, Ethylenglykolmethacrylatphosphat oder auch Ethylenglycolacrylatphosphat gewählt wird/werden.

16. Zementmatrix oder hydraulisches Bindemittel nach einem der Ansprüche 13 oder 14, **dadurch gekennzeichnet, dass** das oder die nicht-ionische(n) Monomer(e) unter Acrylamid oder Methacrylamid oder deren Derivaten, C1-C40-Alkylestern der Acryl- oder Methalcrylsäuren, oxyalkylierten, oxyarylierten, oxyalkylarylierten, oxyarylalkylierten Alkoxyacrylaten oder - methacrylaten (wobei die Zahl des Alkylen-, Arylen-, Alkylarylen-, Arylalkylenoxids zwischen 1 und 120 liegt), Vinylacetat, Vinylpyrrolidon, Styrol oder auch Alphamethylstyrol und insbesondere unter Ethylacrylamid oder Ethylacrylat gewählt wird/werden.

17. Zementmatrix oder hydraulisches Bindemittel nach einem der Ansprüche 13 oder 14, **dadurch gekennzeichnet, dass** das oder die Urethan-Alkoxy-, Uretahn-Aryloxy-, Urethan-Alkylaryloxy-, Urethan-Arylalkyloxy-Polyalkylenglykol-Monomer(e) unter den Reaktionsprodukten von Alkoxypolyalkylenglykol mit einem polymerisierbaren ungesättigten Isocyanat, und insbesondere unter den Reaktionsprodukten von Methoxypolyethylenglykol mit einem Acryl-, Methacryl-, Vinyl- oder auch Allylisocyanat gewählt wird/werden.

18. Zementmatrix oder hydraulisches Bindemittel nach einem der Ansprüche 13 oder 14, **dadurch gekennzeichnet, dass** der Alkyloxy-, Aryloxy-, Alkylaryloxy-, Arylalkyloxy-Polyalkylenglykol-Acrylester oder -Methacrylester ein Methoxypolyethylenglykol-Acrylat oder -Methacrylat ist, wobei das Molekulargewicht des besagten Polyethylenglykols über 300 beträgt.

19. Zementmatrix oder hydraulisches Bindemittel nach einem der Ansprüche 13 oder 14, **dadurch gekennzeichnet, dass** das oder die Vernetzungsmonomer(e) in einer Gruppe bestehend aus Ethylenglykoldimethacrylat, Divinylacetylen, Divinylbenzol, Trimethylolpropantriacrylat, Allylacrylat, Methylenbisacrylamid, Methylenbismethacrylamid, Tetrallyloxyethan, Triallylcyanuraten, aus Polylolen wie beispielsweise Pentaerythritol gewonnenen Allylethem, Sorbitol, Sucrose gewählt wird/werden.

20. Zementmatrix oder hydraulisches Bindemittel nach einem beliebigen der Ansprüche 13 bis 19, **dadurch gekennzeichnet, dass** das Dispergiermittel in seiner vollständigen Säureform umgesetzt wird.

21. Zementmatrix oder hydraulisches Bindemittel nach einem beliebigen der Ansprüche 13 bis 20, **dadurch gekennzeichnet, dass** das Dispergiermittel in seiner anhand eines oder mehrerer Neutralisationsmittel mit einer monovalenten Funktion und gegebenenfalls mit einer polyvalenten Funktion teilweise oder vollständig neutralisierten Form umgesetzt wird.

22. Zementmatrix oder hydraulisches Bindemittel nach Anspruch 21, **dadurch gekennzeichnet, dass** die Neutralisationsmittel mit einer monovalenten Funktion aus der Gruppe bestehend aus den Alkalikationen, insbesondere Natrium und Kalium oder auch Lithium, Ammonium oder aliphatische und/oder cyclische primäre oder sekundäre Amine wie beispielsweise Ethanolamine, Mono- und Diethylamin oder auch Cyclohexylamin, enthaltenden Verbindungen gewählt werden.

23. Zementmatrix oder hydraulisches Bindemittel nach Anspruch 21, **dadurch gekennzeichnet, dass** die Neutralisationsmittel mit einer Polyvalenten Funktion aus der Gruppe bestehend aus den zweiwertige Erdalkalikationen, insbesondere Magnesium und Calcium oder auch Zink, enthaltenden Verbindungen, sowie aus dreiwertige Kationen, darunter insbesondere Aluminium, oder auch bestimmte Kationen mit einer höheren Valenz enthaltenden Verbindungen gewählt werden.

24. Zementmatrix oder hydraulisches Bindemittel nach einem beliebigen der Ansprüche 13 bis 23, **dadurch gekennzeichnet, dass** sie/es ein Beton, ein Mörtel, ein hydraulischer Beton, eine Vergießmasse oder auch eine Zement- und/oder Calciumsulfat-Halbhydrat-Zusammensetzung ist.

25. Verwendung der Zementmatrizen nach einem beliebigen der Ansprüche 13 bis 24 in den Bereichen Bauwesen, Hoch- und Tiefbau, Kunstbau, Offshore-Arbeiten, sowie für petrochemische Zemente und parapetrochemische Dienste.
